(19) **Europäisches Patentamt / European Patent Office / Office européen des brevets**

(11) **EP 3 156 891 A1**

(12) **EUROPEAN PATENT APPLICATION**
published in accordance with Art. 153(4) EPC

(43) Date of publication:
**19.04.2017 Bulletin 2017/16**

(21) Application number: **15822130.9**

(22) Date of filing: **01.06.2015**

(51) Int Cl.:
***G06F 3/06*** *(2006.01)*

(86) International application number:
**PCT/CN2015/080497**

(87) International publication number:
**WO 2016/008338 (21.01.2016 Gazette 2016/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **15.07.2014 CN 201410337244**

(71) Applicant: **Huawei Technologies Co. Ltd.**
**Shenzhen, Guangdong 518129 (CN)**

(72) Inventors:
- **HU, Yu**
  **Shenzhen**
  **Guangdong 518129 (CN)**
- **WEI, Xu**
  **Shenzhen**
  **Guangdong 518129 (CN)**
- **CHENG, Wei**
  **Shenzhen**
  **Guangdong 518129 (CN)**

(74) Representative: **Gill Jennings & Every LLP**
**The Broadgate Tower**
**20 Primrose Street**
**London EC2A 2ES (GB)**

(54) **I/O REQUEST PROCESSING METHOD AND STORAGE SYSTEM**

(57) An I/O request processing method is applied to a storage system and includes: receiving an I/O request, where the I/O request carries a size and a to-be-accessed address of the I/O; determining a type of a to-be-accessed storage device according to the to-be-accessed address; selecting, according to the size of the I/O and the determined device type, from M PHYs configured for the determined device type, a PHY for transmitting the I/O, where the PHYs configured for the storage device of this type are determined according to a total quantity of PHYs in the storage system, a percentage of a quantity of devices of this type in the storage system, and a size of an I/O received by the storage device of this type within a previous access period; and sending the I/O to the storage device by using the selected PHY

Receive an I/O request, where the I/O request carries a size of the I/O and a to-be-accessed address — S11

Determine a device type of a to-be-accessed storage device according to the to-be-accessed address — S12

Select, according to the size of the I/O and the determined device type, from M PHYs configured for the storage device of this type, a PHY for transmitting the I/O — S13

Send the I/O to the storage device by using the selected PHY — S14

FIG. 3

**Description**

**TECHNICAL FIELD**

The present invention relates to the field of storage technologies, and in particular, to an I/O request processing method and a storage system.

**BACKGROUND**

A SAS (Serial Attached SCSI, serial attached Small Computer System Interface) standard is a manner for information exchange between SCSI (Small Computer Systems Interface, Small Computer System Interface) devices using SAS serial attached communication. In a storage system based on the SAS standard, in order to improve bandwidth utilization, an I/O (Input Output, input output) is transmitted by selecting an idle PHY according to degrees of busyness of PHYs (Physical Layer, physical channel), so that a large quantity of PHYs are in a busy state, thereby improving the bandwidth utilization.

However, the foregoing technology has at least the following technical problem:

When PHYs are allocated to I/Os according to only degrees of busyness of the PHYs, bandwidth utilization is improved; however, when the I/Os have different sizes and storage devices to be accessed by the I/Os have different device types, an IOPS (I/O per second, a quantity of I/Os processed per second) of a storage system is relatively low.

**SUMMARY**

The present invention provides an I/O request processing method and a storage system, which resolve a problem in the prior art that a data storage system has a relatively low IOPS.

According to a first aspect, the present invention provides an input output I/O request processing method, where the method is applied to a storage system, and the storage system includes a controller and storage devices of multiple different types, where the storage devices of the multiple different types are connected to the controller by using a serial attached Small Computer System Interface SAS, and the SAS includes multiple physical layers PHYs; and the method includes:

  receiving an I/O request, where the I/O request carries a size and a to-be-accessed address of the I/O ;
  determining a device type of a to-be-accessed storage device according to the to-be-accessed address;
  selecting, according to the size of the I/O and the determined device type, a PHY for transmitting the I/O from M PHYs configured for the storage device of the determined device type, where the PHYs configured for the storage device of the determined device type are determined according to a total quantity of PHYs in the storage system, a percentage of a quantity of devices of this type in the storage system, and a size of an I/O received by the storage device of this type within a previous access period, and M is a positive integer; and
  sending the I/O to the storage device by using the selected PHY.

With reference to the first aspect, in a first possible implementation manner of the first aspect, the selecting, according to the size of the I/O and the determined device type, from M PHYs configured for the storage device of this type, a PHY for transmitting the I/O includes:

  determining the M PHYs from the multiple PHYs according to the determined device type, where all storage devices of this device type can communicate with the controller by using the M PHYs; and
  selecting, from the M PHYs according to the size of the I/O, N PHYs for transmitting the I/O, where the N PHYs are used to transmit an I/O whose I/O size satisfies a preset condition, N is a positive integer, and N is not greater than M.

With reference to the first possible implementation manner of the first aspect, in a second possible implementation manner of the first aspect, where when N is a positive integer not less than 2, the method further includes:

  selecting, according to degrees of busyness of the N PHYs, an idle PHY from the N PHYs as the PHY for transmitting the I/O.

With reference to the first aspect, the first possible implementation manner of the first aspect, or the second possible implementation manner of the first aspect, in a third possible implementation manner of the first aspect, the method further includes:

allocating the M PHYs to the storage device of this type according to the total quantity of the PHYs in the storage system and the percentage of the quantity of storage devices of this type in the storage system; and determining, in the M PHYs and according to statistical proportions of I/Os of different sizes accessing the storage device of this type within the previous access period, PHYs for processing I/Os of different sizes within a next access period.

With reference to the first aspect, the first possible implementation manner of the first aspect, or the second possible implementation manner of the first aspect, in a fourth possible implementation manner of the first aspect, the method further includes:

allocating the M PHYs to the storage device of this type according to the total quantity of the PHYs in the storage system and the percentage of the quantity of storage devices of this type in the storage system; and determining, in the M PHYs and according to a preset policy, PHYs for processing I/Os of different sizes.

According to a second aspect, based on a same invention concept, the present invention provides a storage system, where the storage system includes a controller and storage devices of multiple different types, where the storage devices of the multiple different types are connected to the controller by using a serial attached Small Computer System Interface SAS, and the SAS includes multiple physical layer channels PHYs; and the controller is configured to:

receive an I/O request, where the I/O request carries a size and a to-be-accessed address of the I/O ; determine a device type of a to-be-accessed storage device according to the to-be-accessed address; select, according to the size of the I/O and the determined device type, from M PHYs configured for the storage device of this type, a PHY for transmitting the I/O, where the PHYs configured for the storage device of this type are determined according to a total quantity of PHYs in the storage system, a percentage of a quantity of devices of this type in the storage system, and a size of an I/O received by the storage device of this type within a previous access period, and M is a positive integer; and send the I/O to the storage device by using the selected PHY.

With reference to the second aspect, in a first possible implementation manner of the second aspect, the controller is further configured to:

determine the M PHYs from the multiple PHYs according to the determined device type, where all storage devices of this device type can communicate with the controller by using the M PHYs; and select, from the M PHYs according to the size of the I/O, N PHYs for transmitting the I/O, where the N PHYs are used to transmit an I/O whose I/O size satisfies a preset condition, N is a positive integer, and N is not greater than M.

With reference to the first possible implementation manner of the second aspect, in a second possible implementation manner of the second aspect, where when N is a positive integer not less than 2, the controller is further configured to:

select, according to degrees of busyness of the N PHYs, an idle PHY from the N PHYs as the PHY for transmitting the I/O.

With reference to the second aspect, the first possible implementation manner of the second aspect, or the second possible implementation manner of the second aspect, in a third possible implementation manner of the second aspect, the controller is further configured to:

allocate the M PHYs to the storage device of the determined device type according to the total quantity of the PHYs in the storage system and the percentage of the quantity of storage devices of this type in the storage system; and determine, in the M PHYs according to statistical proportions of I/Os of different sizes accessing the storage device of this type within the previous access period, PHYs for processing I/Os of different sizes within a next access period.

With reference to the second aspect, the first possible implementation manner of the second aspect, or the second possible implementation manner of the second aspect, in a fourth possible implementation manner of the second aspect, the controller is further configured to:

allocate the M PHYs to the storage device of this type according to the total quantity of the PHYs in the storage system and the percentage of the quantity of storage devices of this type in the storage system; and determine, in the M PHYs according to a preset policy, PHYs for processing I/Os of different sizes.

The present invention has at least the following technical effects or advantages:

The present invention discloses an I/O request processing method, where the method is applied to a controller in a storage system, the storage system further includes storage devices of multiple different types, the storage devices of the multiple different types are connected to the controller by using a SAS interface, and the SAS interface includes multiple PHYs; and the method includes: receiving an I/O request, where the I/O request carries a size of the I/O and a to-be-accessed address; determining a device type of a to-be-accessed storage device according to the to-be-accessed address; and selecting, according to the size of the I/O and the determined device type, from M PHYs configured for the storage device of this type, a PHY for transmitting the I/O, where the PHYs configured for the storage device of this type are determined according to a total quantity of PHYs in the storage system, a percentage of a quantity of devices of this type in the storage system, and a size of an I/O received by the storage device of this type within a previous access period, and M is a positive integer. In the present invention, a PHY for transmitting an I/O is selected according to a size of the I/O and a device type of a storage device to be accessed by the I/O, which can effectively improve an IOPS of a storage system.

## BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1 is a schematic structural diagram of a storage system according to an embodiment of the present invention;
FIG. 2 is a schematic diagram of an application scenario of an I/O request processing method according to an embodiment of the present invention;
FIG. 3 is a flowchart of an I/O request processing method according to an embodiment of the present invention; and
FIG. 4 is a detailed flowchart of step S13 according to an embodiment of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention.

**Embodiment 1**

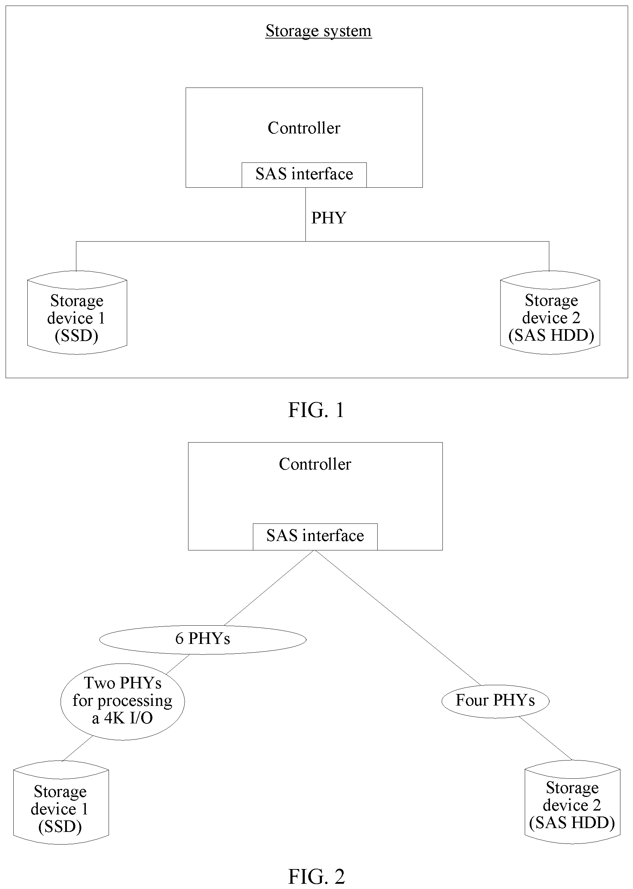

This embodiment provides an I/O request processing method, applied to a storage system shown in FIG. 1, where the storage system includes a controller and storage devices of multiple different types, and the storage devices of the multiple different types are connected to the controller by using a SAS interface, and the SAS interface includes multiple PHYs.

In a specific implementation process, the storage devices of the multiple different types specifically refer to: storage devices having different types of storage media. For example, as shown in FIG. 1, the storage system includes two types of storage devices (which are specifically: a storage device 1 and a storage device 2), and the two types of storage devices have different types of storage media, where a storage medium of the storage device 1 is an SSD (Solid State Disk, solid state disk), a storage medium of the storage device 2 is a SAS HDD (Serial Attached SCSI Hard Disk Drive, serial attached Small Computer System Interface hard disk drive). A quantity of storage devices of each type is not specifically limited herein.

In a specific implementation process, the SAS interface includes multiple PHYs, and the controller can communicate with each storage device in the storage system by using the PHYs. For example, as shown in FIG. 2, the SAS interface in the storage system includes 10 PHYs in total (which are specifically: a PHY 1, a PHY 2, a PHY 3, a PHY 4, a PHY 5, a PHY 6, a PHY 7, a PHY 8, a PHY 9, and a PHY 0), and the controller can deliver an I/O to each storage device in the storage system by using each of the 10 PHYs.

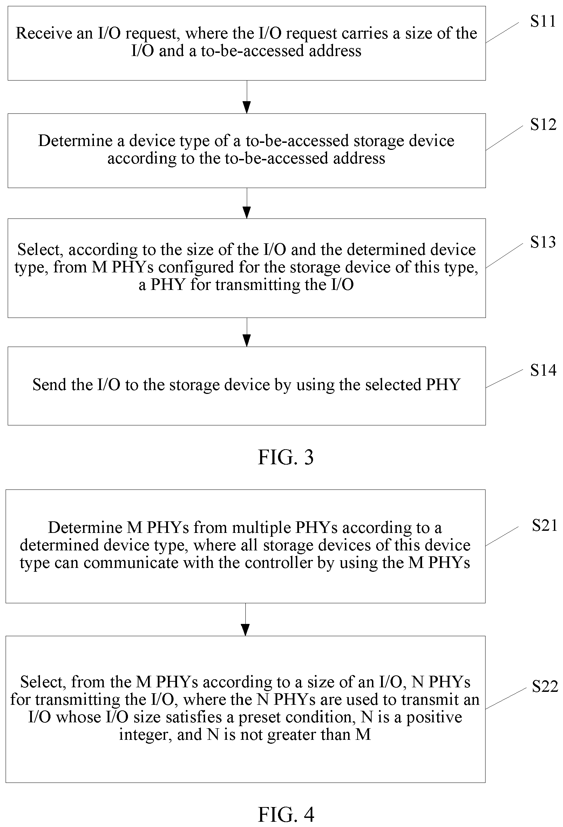

As shown in FIG. 3, the I/O request processing method is applied to the controller and includes:

Step S 11: Receive an I/O request, where the I/O request carries a size of the I/O and a to-be-accessed address.

In a specific implementation process, the I/O request may be a data read request or a data write request; when the I/O request is a data write request, the I/O request further carries to-be-written data that needs to be written into a storage device. For example, as shown in FIG. 2, the I/O request is a data read request, and the size of the I/O in the I/O request is 4 K, and the corresponding to-be-accessed address is an address of the storage device 1.

In a specific implementation process, the size of the I/O specifically refers to a value of a total data volume included in the I/O request.

In the following description, an access period in which step S11 to step S14 are performed is referred to as a second access period, and an access period prior to the second access period is referred to as a first access period.

Step S12: Determine a device type of a to-be-accessed storage device according to the to-be-accessed address. For example, as shown in FIG. 2, it is determined, according to a correspondence between addresses of storage devices and device types of the storage devices, that the device type of a storage device to be accessed by the I/O is SSD.

Step S13: Select, according to the size of the I/O and the determined device type, from M PHYs configured for the storage device of this type, a PHY for transmitting the I/O. The PHYs configured for the storage device of this type are determined according to a total quantity of PHYs in the storage system, a percentage of a quantity of devices of this type in the storage system, and a size of an I/O received by the storage device of this type within a previous access period, and M is a positive integer.

For example, as shown in FIG. 2, six PHYs in total (for example, a PHY 1 to a PHY 6) are configured for the storage device of the SSD type; therefore, the PHY for transmitting the I/O needs to be selected from the six PHYs. The PHYs configured for the storage device of the SSD type are determined according to a total quantity of the PHYs in the storage system, a percentage of a quantity of devices of the SSD type in the storage system, and a size of an I/O received by the storage device of the SSD type within a previous access period (that is, the first access period).

Step S14: Send the I/O to the storage device by using the selected PHY. For example, as shown in FIG. 2, if the PHY 1 is selected as the PHY for transmitting the I/O, the I/O is sent to the storage device of the SSD type (that is, the storage device 1) by using the PHY 1.

Storage devices of a same type have different processing speeds for I/Os of different sizes, and storage devices of different types have different speeds for I/Os of a same size. Therefore, when PHYs are allocated to I/Os according to only degrees of busyness of the PHYs, bandwidth utilization can be improved, but a relatively low IOPS of a storage system is caused. In this embodiment, a PHY for transmitting an I/O is selected according to a size of the I/O and a device type of a storage device to be accessed by the I/O, which can effectively improve an overall IOPS of a storage system.

Optionally, in this embodiment, as shown in FIG. 4, step S13 includes:

Step S21: Determine the M PHYs from the multiple PHYs according to the determined device type, where all storage devices of this device type can communicate with the controller by using the M PHYs.

In a specific implementation process, before the first access period ends (or before the second access period starts), the controller already configures PHYs that are used by storage devices of each type within the second access period. For example, as shown in FIG. 2, in the storage system, before the first access period ends (or before the second access period starts), the controller already configures six PHYs (for example, a PHY 1, a PHY 2, a PHY 3, a PHY 4, a PHY 5, and a PHY 6) for the storage device of the SSD type and configures four PHYs (for example, a PHY 7, a PHY 8, a PHY 9, and a PHY 0) for the storage device of the SAS HDD type. When it is determined that the to-be-accessed storage device is of the SSD type, six PHYs preconfigured for a storage device of a DISK type can be determined from the 10 PHYs of the storage system.

Step S22: Select, from the M PHYs according to the size of the I/O, N PHYs for transmitting the I/O, where the N PHYs are used to transmit an I/O whose I/O size satisfies a preset condition, N is a positive integer, and N is not greater than M.

In a specific implementation process, the N PHYs are specifically used to transmit I/Os whose I/O sizes are within a preset interval. Based on an interval in which the size of the I/O to be transmitted is located, the N PHYs for transmitting I/Os that are within this interval may be selected from the M PHYs. For example, as shown in FIG. 2, the controller further classifies the six PHYs allocated to the storage device of the SSD type, where the PHY 1 and the PHY 2 are used to transmit I/Os within an interval of 0 to 16 K, the PHY 3 and the PHY 4 are used to transmit I/Os within an interval of 17 K to 32 K, and the PHY 5 and the PHY 6 are used to transmit I/Os within an interval of 33 K to 48 K. When a size of an I/O to be transmitted is 4 K, it is determined, based on the size of the I/O to be transmitted, that an interval in which the I/O is located is 0 to 16 K, and therefore, it is determined that the PHY 1 and the PHY 2 are PHYs for transmitting the 4-K I/O.

Further, when N is a positive integer not less than 2, the method further includes:

randomly selecting a PHY from the N PHYs as the PHY for transmitting the I/O; for example, as shown in FIG. 2, a PHY is randomly selected from the PHY 1 and the PHY 2 to serve as the PHY for transmitting the I/O;

or

selecting, according to degrees of busyness of the N PHYs, an idle PHY from the N PHYs as the PHY for transmitting the I/O; for example, as shown in FIG. 2, if the PHY 2 is in a busy state, and the PHY 1 is in an idle state, the PHY 1 is selected as the PHY for transmitting the I/O.

Optionally, in this embodiment, the method further includes:

allocating the M PHYs to the storage device of this type according to the total quantity of the PHYs in the storage system and the percentage of the quantity of storage devices of this type in the storage system; and
determining, in the M PHYs according to a preset policy, PHYs for processing I/Os of different sizes; for example, PHYs for processing I/Os of different sizes within a next access period (that is, the second access period) are determined in the M PHYs according to statistical proportions of I/Os of different sizes accessing the storage device of this type within the previous access period (that is, the first access period).

In a specific implementation process, PHYs, for processing I/Os of different sizes, of a storage device of each type within the second access period are determined based on the following algorithm.

(1) P intervals are determined for all I/Os in the storage system within the first access period based on different sizes of the I/Os, and each interval is numbered. For example, 0 to 16 K is an interval and is numbered 1, 17 K to 32 K is an interval and is numbered 2, 32 K to 48 K is an interval and is numbered 3, and so on, to obtain P intervals numbered 1 to P.
(2) When the storage system includes storage devices of Q different types in total, a storage device of each type is numbered. For example, when the storage system includes storage devices of three types in total: SDD, SAS SDD, and DISK, a storage device of the SDD type is numbered 1, a storage device of the SAS SDD type is numbered 2, a storage device of the DISK type is numbered 3, and so on, to obtain Q storage device types numbered 1 to Q.
(3) An interval in which each I/O in all I/Os received by the storage system within the first access period is located and a device type of a storage device to be accessed are determined; all the I/Os received by the storage system within the first access period are classified into $P \times Q$ categories, and a quantity of I/Os of each category is counted; herein, the quantity of I/Os of each category is referred to as a first count of each I/O category, and is expressed as $IO\mathrm{cnt}_1(j, i)$.i is a number of an interval, and a value range thereof is any integer from 1 to P; j is a number of a device type, and a value range thereof is any integer from 1 to Q.
(4) Because storage devices of different types have different processing speeds for each I/O category, an influence factor is separately set for each I/O category, and the influence factor is specifically determined based on formula (a):

$$a(j, i) = \frac{IOPS(j, i)}{\sum_{j=1}^{Q} IOPS(j, i)} \qquad (a)$$

where $a(j, i)$ is an influence factor of an I/O that is going to access a storage device of a device type numbered j and that is in an interval numbered i; and $IPOS(j, i)$ is a maximum IOPS that can be achieved when the storage device of the device type numbered j processes the I/O in the interval numbered i.
(5) A first percentage, of a quantity of PHYs allocated within the second period to each I/O category among the $P \times Q$ I/O categories, to a total quantity of PHYs is determined according to formula (b):

$$\mathrm{per}_1(j, i) = \frac{IO\mathrm{cnt}_1(j, i) \times a(j, i)}{\sum_{j=1}^{M} \left[ IO\mathrm{cnt}_1(j, i) \times a(j, i) \right]} \qquad (b)$$

where $\mathrm{per}_1(j, i)$ is a first percentage, of a quantity of PHYs allocated within the second period to I/Os that are going to access a storage device of a device type numbered j and that are in an interval numbered i, to the total quantity of the PHYs, and $IO\mathrm{cnt}_1(j, i)$ is a first count of I/Os that are going to access the storage device of the device type numbered j and that are in the interval numbered i.
(6) For each type among the Q types, a second percentage, of a quantity of PHYs allocated to I/Os that are going to access a storage device of this type, to the total quantity of the PHYs is determined according to formula (c):

$$\mathrm{per}_2\left(\mathrm{j}\right)=\frac{\displaystyle\sum_{\mathrm{j}=1}^{M}\mathrm{per}_1\left(\mathrm{j},\mathrm{i}\right)}{P} \qquad (c)$$

where $\mathrm{per}_2(\mathrm{j})$ is a second percentage, of a quantity of PHYs allocated within the second access period to I/Os that are going to access a storage device of a type numbered j, to the total quantity of the PHYs.

(7) For each type among the Q types, a quantity of PHYs allocated within the second period to I/Os that are going to access a storage device of this type is determined according to formula (d):

$$\mathrm{Num}\left(\mathrm{j}\right)=\mathrm{per}_2\left(\mathrm{j}\right)\times B \qquad (d)$$

where Num(j) is a quantity of PHYs allocated within the second period to I/Os that are going to access a storage device of a type numbered j, and $B$ is the total quantity of the PHYs in the storage system.

(8) If a quantity of PHYs allocated within the second period to I/Os that are going to access a storage device of a type numbered x is greater than or equal to 2, a second count of I/Os that are going to access the storage device of the type numbered x and that are in an interval numbered i is obtained according to formula (e):

$$IO\mathrm{cnt}_2\left(\mathrm{x},\mathrm{i}\right)=\frac{IO\mathrm{cnt}_1\left(\mathrm{x},\mathrm{i}\right)}{IO\mathrm{size}_{\mathrm{max}}\left(\mathrm{i}\right)} \qquad (e)$$

where $IO\mathrm{cnt}_2(\mathrm{x},\mathrm{i})$ is the second count of I/Os that are going to access the storage device of the type numbered x and that are in the interval numbered i; $IO\mathrm{cnt}_1(\mathrm{x},\mathrm{i})$ is a first count of I/Os that are going to access the storage device of the type numbered x and that are in the interval numbered i; and $IO\mathrm{size}_{\mathrm{max}}(\mathrm{i})$ is an upper limit value of the interval numbered i; for example, an upper limit value of an interval of 0 to 16 K is 16 K.

(9) A third percentage, of a quantity of PHYs required to be allocated within the second period to I/Os that are going to access the storage device of the type numbered x and that are in the interval numbered i, to the total quantity of the PHYs is obtained according to formula (f):

$$\mathrm{per}_3\left(\mathrm{x},\mathrm{i}\right)=\frac{IO\mathrm{cnt}_2\left(\mathrm{x},\mathrm{i}\right)}{\displaystyle\sum_{\mathrm{i}=1}^{P}IO\mathrm{cnt}_2\left(\mathrm{x},\mathrm{i}\right)} \qquad (f)$$

where $\mathrm{per}_3(\mathrm{n},\mathrm{i})$ is the third percentage, of the quantity of the PHYs required to be allocated within the second period to I/Os that are going to access the storage device of the type numbered x and that are in the interval numbered i, to the total quantity of the PHYs; and $IO\mathrm{cnt}_2(\mathrm{x},\mathrm{i})$ is the second count of I/Os that are going to access the storage device of the type numbered x and that are in the interval numbered i.

(10) The quantity of the PHYs allocated within the second period to I/Os that are going to access the storage device of the type numbered x and that are in the interval numbered i is determined according to formula (g):

$$\mathrm{Num}\left(\mathrm{x},\mathrm{i}\right)=\mathrm{per}_3\left(\mathrm{x}\right)\times B \qquad (g)$$

where Num(x, i) is a quantity of the PHYs required to be allocated within the second period to I/Os that are going to access the storage device of the type numbered x and that are in the interval numbered i.

In this embodiment, because I/Os of a same type (that is, I/Os that are going to access storage devices having a same device type number and that have a same interval number) are sent by using same PHYs, so that small I/Os can be preferentially transmitted and stored, thereby improving overall IOPS performance of a storage system.

An application scenario of this embodiment of the present invention is: For a mixture of I/Os of different sizes and a mixture of the SSD and SAS HDD in hierarchical storage, multiple scenarios are applied, which can improve overall performance of a storage system, and especially, decreases a delay for processing small I/Os in mixed services.

An application scope of this embodiment of the present invention is all storage systems using a SAS backend.

A group of experimental data is provided below. As shown in Table 1, in the experiment, two service models are used to compare a traditional scheme with a scheme in this embodiment of the present invention, where in the traditional scheme, PHYs are allocated to I/Os according to degrees of busyness of the PHYs. It can be known from the experimental data in Table 1 that an IOPS is improved by 10% to 30% approximately by using a prototype established according to the two service models of this embodiment of the present invention.

Table 1

| Service | Traditional scheme | | Scheme in this embodiment | | IOPS | Bandwidth |
|---|---|---|---|---|---|---|
| models | IOPS | Bandwidth(KB/S) | IOPS | Bandwidth(KB/S) | improvement percentage | improvement percentage |
| Model 1: 64K+16 K+4K+ 512 B (read in a mixed sequence) | 113243 | 1470100 | 152287 | 1241077 | 34.48% | -18.45% |
| Model 2: 128 K + 512 B (read in a mixed sequence) | 131952 | 900573 | 149870 | 913025 | 13.58% | 1.38% |

The foregoing technical solution in this embodiment of this application has at least the following technical effects or advantages:

In this embodiment, PHYs are dynamically allocated according to different sizes of I/Os and different storage media, which increase the utilization of the PHYs and improves overall IOPS performance of a storage system.

**Embodiment 2**

Based on a same invention concept, as shown in FIG. 1, this embodiment provides a storage system, where the storage system includes a controller and storage devices of multiple different types, where the storage devices of the multiple different types are connected to the controller by using a SAS interface, and the SAS interface includes multiple PHYs; and the controller is configured to:

receive an I/O request, where the I/O request carries a size of the I/O and a to-be-accessed address; determine a device type of a to-be-accessed storage device according to the to-be-accessed address; select, according to the size of the I/O and the determined device type, from M PHYs configured for the storage device of this type, a PHY for transmitting the I/O, where the PHYs configured for the storage device of this type are determined according to a total quantity of PHYs in the storage system, a percentage of a quantity of devices of this type in the storage system, and a size of an I/O received by the storage device of this type within a previous access period, and M is a positive integer; and send the I/O to the storage device by using the selected PHY.

In the present invention, a PHY for transmitting an I/O is selected according to a size of the I/O and a device type of a storage device to be accessed by the I/O, which can effectively improve an IOPS of a storage system.

Optionally, in this embodiment, the controller is further configured to:

determine the M PHYs from the multiple PHYs according to the determined device type, where all storage devices of this device type can communicate with the controller by using the M PHYs; and select, from the M PHYs according to the size of the I/O, N PHYs for transmitting the I/O, where the N PHYs are used to transmit an I/O whose I/O size satisfies a preset condition, N is a positive integer, and N is not greater than M.

Optionally, in this embodiment, when N is a positive integer not less than 2, the controller is further configured to:

select, according to degrees of busyness of the N PHYs, an idle PHY from the N PHYs as the PHY for transmitting the I/O.

Optionally, in this embodiment, the controller is further configured to:

allocate the M PHYs to the storage device of this type according to the total quantity of the PHYs in the storage system and the percentage of the quantity of storage devices of this type in the storage system; and determine, in the M PHYs according to statistical proportions of I/Os of different sizes accessing the storage device of this type within the previous access period, PHYs for processing I/Os of different sizes within a next access period.

Optionally, in this embodiment, the controller is further configured to:

allocate the M PHYs to the storage device of this type according to the total quantity of the PHYs in the storage system and the percentage of the quantity of storage devices of this type in the storage system; and determine, in the M PHYs according to a preset policy, PHYs for processing I/Os of different sizes.

A person skilled in the art may clearly understand that, the technologies in the embodiments of the present invention may be implemented by software in addition to a necessary general hardware platform. Based on such an understanding, the technical solutions in the embodiments of the present invention essentially, or the part contributing to the prior art may be implemented in the form of a software product. The computer software product is stored in a storage medium, such as an ROM/RAM, a magnetic disk, or an optical disc, and includes several instructions for instructing a computer device (which may be a personal computer, a server, or a network device) to perform the methods described in the embodiments or some parts of the embodiments of the present invention.

Finally, it should be noted that the foregoing embodiments are merely intended for describing the technical solutions of the present invention, but not for limiting the present invention. The embodiments provided in the present application are merely exemplary. A person skilled in the art may clearly understand that, for the purpose of convenient and brief description, in the foregoing embodiments, the descriptions of the embodiments have their respective focuses. For a part that is not described in detail in an embodiment, reference may be made to related descriptions in other embodiments. Features disclosed in the embodiments of the present invention, claims, and drawings may independently exist or exist in a combination.

**Claims**

1. An input output I/O request processing method, wherein the method is applied to a storage system, wherein the storage system comprises a controller and storage devices of multiple different types, the storage devices of the multiple different types are connected to the controller by using a serial attached Small Computer System Interface SAS, and the SAS comprises multiple physical layers, PHYs; and the method comprises:

receiving an I/O request, wherein the I/O request carries a size and a to-be-accessed address of the I/O; determining a device type of a to-be-accessed storage device according to the to-be-accessed address; selecting, according to the size of the I/O and the determined device type, a PHY for transmitting the I/O from M PHYs configured for the storage device of the determined device type, wherein the PHYs configured for the storage device of the determined device type are determined according to a total quantity of PHYs in the storage system, a percentage of a quantity of devices of the determined device type in the storage system, and a size of an I/O received by the storage device of this type within a previous access period, and M is a positive integer; and sending the I/O to the storage device by using the selected PHY.

2. The method according to claim 1, wherein the selecting, according to the size of the I/O and the determined device type, a PHY for transmitting the I/O from M PHYs configured for the storage device of the determined device type comprises:

determining the M PHYs from the multiple PHYs according to the determined device type, wherein all storage devices of the determined device type can communicate with the controller by using the M PHYs; and selecting, from the M PHYs and according to the size of the I/O, N PHYs for transmitting the I/O, wherein the N PHYs are used to transmit an I/O whose I/O size satisfies a preset condition, N is a positive integer, and N is not greater than M.

3. The method according to claim 2, wherein when N is a positive integer not less than 2, the method further comprises:

   selecting, according to degrees of busyness of the N PHYs, an idle PHY from the N PHYs as the PHY for transmitting the I/O.

4. The method according to any one of claims 1 to 3, wherein the method further comprises:

   allocating the M PHYs to the storage device of the determined device type according to the total quantity of the PHYs in the storage system and the percentage of the quantity of storage devices of the determined device type in the storage system; and
   determining, in the M PHYs and according to statistical proportions of different size I/Os accessing the storage device of the determined device type within a previous access period, PHYs for processing I/Os of different sizes within a next access period.

5. The method according to any one of claims 1 to 3, wherein the method further comprises:

   allocating the M PHYs to the storage device of the determined device type according to the total quantity of the PHYs in the storage system and the percentage of the quantity of storage devices of the determined device type in the storage system; and
   determining, in the M PHYs according to a preset policy, PHYs for processing I/Os of different sizes.

6. A storage system, wherein the storage system comprises a controller and storage devices of multiple different types, wherein the storage devices of the multiple different types are connected to the controller by using a serial attached Small Computer System Interface SAS, and the SAS comprises multiple physical layers, PHYs; and the controller is configured to:

   receive an I/O request, wherein the I/O request a size and a to-be-accessed address of the I/O ; determine a device type of a to-be-accessed storage device according to the to-be-accessed address; select, according to the size of the I/O and the determined device type, a PHY for transmitting the I/Ofrom M PHYs configured for the storage device of the determined device type, wherein the PHYs configured for the storage device of the determined device type are determined according to a total quantity of PHYs in the storage system, a percentage of a quantity of devices of the determined device type in the storage system, and a size of an I/O received by the storage device of the determined device type within a previous access period, and M is a positive integer; and send the I/O to the storage device by using the selected PHY.

7. The storage system according to claim 6, wherein the controller is further configured to:

   determine the M PHYs from the multiple PHYs according to the determined device type, wherein all storage devices of the determined device type can communicate with the controller by using the M PHYs; and select, from the M PHYs and according to the size of the I/O, N PHYs for transmitting the I/O, wherein the N PHYs are used to transmit an I/O whose I/O size satisfies a preset condition, N is a positive integer, and N is not greater than M.

8. The storage system according to claim 7, wherein when N is a positive integer not less than 2, the controller is further configured to:

   select, according to degrees of busyness of the N PHYs, an idle PHY from the N PHYs as the PHY for transmitting the I/O.

9. The storage system according to any one of claims 6 to 8, wherein the controller is further configured to:

   allocate the M PHYs to the storage device of the determined device type according to the total quantity of the PHYs in the storage system and the percentage of the quantity of storage devices of the determined device type in the storage system; and determine, in the M PHYs and according to statistical proportions of different size I/Os accessing the storage device of the determined device type within the previous access period, PHYs for processing I/Os of different sizes within a next access period.

10. The storage system according to any one of claims 6 to 8, wherein the controller is further configured to:

allocate the M PHYs to the storage device of the determined device type according to the total quantity of the PHYs in the storage system and the percentage of the quantity of storage devices of the determined device type in the storage system; and determine, in the M PHYs according to a preset policy, PHYs for processing I/Os of different sizes.

Storage system

Controller

SAS interface

PHY

Storage
device 1
(SSD)

Storage
device 2
(SAS HDD)

FIG. 1

Controller

SAS interface

6 PHYs

Two PHYs
for processing
a 4K I/O

Four PHYs

Storage
device 1
(SSD)

Storage
device 2
(SAS HDD)

FIG. 2

Receive an I/O request, where the I/O request carries a size of the I/O and a to-be-accessed address — S11

Determine a device type of a to-be-accessed storage device according to the to-be-accessed address — S12

Select, according to the size of the I/O and the determined device type, from M PHYs configured for the storage device of this type, a PHY for transmitting the I/O — S13

Send the I/O to the storage device by using the selected PHY — S14

FIG. 3

Determine M PHYs from multiple PHYs according to a determined device type, where all storage devices of this device type can communicate with the controller by using the M PHYs — S21

Select, from the M PHYs according to a size of an I/O, N PHYs for transmitting the I/O, where the N PHYs are used to transmit an I/O whose I/O size satisfies a preset condition, N is a positive integer, and N is not greater than M — S22

FIG. 4

EP 3 156 891 A1

# INTERNATIONAL SEARCH REPORT

International application No.

**PCT/CN2015/080497**

### A. CLASSIFICATION OF SUBJECT MATTER

G06F 3/06 (2006.01) i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI, IEEE, GOOGLE: input-output, I/O, SAS, physical channel, physical link, physical connection, PHY, physical layer

### C. DOCUMENTS CONSIDERED TO BE RELEVANT

| Category* | Citation of document, with indication, where appropriate, of the relevant passages | Relevant to claim No. |
|---|---|---|
| PX | CN 104111805 A (HUAWEI TECHNOLOGIES CO., LTD.), 22 October 2014 (22.10.2014), claims 1-10 | 1-10 |
| X | CN 101042632 A (HITACHI LTD.), 26 September 2007 (26.09.2007), description, page 4, paragraph 1 to page 5, paragraph 1, page 10, paragraph 1 to page 12, last paragraph and page 20, the fourth paragraph from the bottom | 1-10 |
| A | US 2014059256 A1 (LSI CORPORATION), 27 February 2014 (27.02.2014), the whole document | 1-10 |
| A | US 2006101171 A1 (GRIEFF, T.W.), 11 May 2006 (11.05.2006), the whole document | 1-10 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 July 2015 (28.07.2015) | **26 August 2015 (26.08.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **KONG, Xin** Telephone No.: (86-10) **62413668** |
|---|---|

Form PCT/ISA/210 (second sheet) (July 2009)

14

## INTERNATIONAL SEARCH REPORT
Information on patent family members

| International application No. |
|---|
| **PCT/CN2015/080497** |

| Patent Documents referred in the Report | Publication Date | Patent Family | Publication Date |
|---|---|---|---|
| CN 104111805 A | 22 October 2014 | None | |
| CN 101042632 A | 26 September 2007 | US 2007220204 A1 | 20 September 2007 |
| | | EP 1837750 A2 | 26 September 2007 |
| | | JP 2007256993 A | 04 October 2007 |
| | | US 2011138097 A1 | 09 June 2011 |
| | | CN 102306087 A | 04 January 2012 |
| | | US 2012311256 A1 | 06 December 2012 |
| US 2014059256 A1 | 27 February 2014 | None | |
| US 2006101171 A1 | 11 May 2006 | None | |

Form PCT/ISA/210 (patent family annex) (July 2009)